Europäisches Patentamt

European Patent Office

Office européen des brevets

(19)

(11) Numéro de publication : **0 113 619**
**B1**

(12) FASCICULE DE BREVET EUROPÉEN

(45) Date de publication du fascicule du brevet :
28.05.86

(21) Numéro de dépôt : 83402401.0

(22) Date de dépôt : 13.12.83

(51) Int. Cl.⁴ : **B 28 D   1/06**, B 27 B   3/10,
B 23 Q   1/26

(54) Dispositif pour la coupe de blocs de granit, marbres, pierres et autres produits analogues.

(30) Priorité : 15.12.82 FR 8221040

(43) Date de publication de la demande :
18.07.84 Bulletin 84/29

(45) Mention de la délivrance du brevet :
28.05.86 Bulletin 86/22

(84) Etats contractants désignés :
AT BE DE GB IT NL SE

(56) Documents cités :
BE-A-   661 521
DE-A- 2 161 393
DE-C-   904 946
FR-A-   586 320
FR-A- 1 193 333
FR-A- 1 299 218
FR-A- 1 372 163
FR-A- 1 440 801
FR-A- 2 009 748
FR-A- 2 032 787
US-A- 3 466 951
US-A- 4 040 681

(73) Titulaire : ROCAMAT
5 rue Bellini
F-92800 Puteaux (FR)

(72) Inventeur : Marechal, Roger
10, rue de la Gare Nuits S/Armancon
F-89390 Ravieres Yonne (FR)
Inventeur : Jeantet, Lucien M.
2, allée des Tilleuls
37140 Bourgueil (FR)

(74) Mandataire : Madeuf, René Louis et al
Cabinet Madeuf 3, Avenue Bugeaud
F-75116 Paris (FR)

## Description

La présente invention concerne un dispositif de coupe utilisable sans modification pour la coupe de tout matériau naturel, ce dispositif comportant des lames disposées dans un cadre qui est supporté pour pouvoir être déplacé dans un mouvement rectiligne alternatif ou en dessous d'un cadre de guidage, lui-même mobile verticalement sous l'effet de vérins.

Des machines de ce type appelées châssis multilames sont bien connues dans la technique et ont été décrites dans la demande de brevet allemand 2 161 393, le brevet français 1 440 801, le brevet français 1 193 333, le brevet belge 661 521, le brevet français 586 320 dont la description fait partie de la présente demande de brevet. Cependant, il n'a pas été possible jusqu'à présent de réaliser une machine mixte permettant de réaliser industriellement le sciage de matériaux de dureté aussi différente que la pierre tendre et le granit en utilisant des lames diamantées. D'autre part, si le sciage au diamant est bien connu dans le sciage des pierres et marbres, on constate actuellement une stagnation des performances des outils et des cadences de production des machines. Les raisons en sont les suivantes :

1. Le sciage à la lame diamantée du granit, en particulier en tranches minces par les châssis multilames existant sur le marché n'est pas envisageable du fait de la trop faible durée de vie des outils. La seule méthode actuellement compétitive consiste à interposer entre les lames et le fond du trait de sciage de la grenaille métallique.

2. La conception actuelle des machines ne permet pas ou ne permet qu'insuffisamment la variation des paramètres de coupe et donc leur combinaison pour une optimisation des conditions de coupe.

3. Les guidages actuels des pièces en mouvement sont réalisés par le contact métal sur métal de surfaces de formes variées, qui, quelles que soient leurs tolérances, voient leur précision diminuer du fait de l'usure et transmettent des vibrations et chocs aux outils en altérant la qualité de la coupe et en diminuant la durée de vie desdits outils.

La technique antérieure a aussi fait connaître pour la réalisation de palier ou pour le guidage de glissières des dispositifs dits fluides qui évitent ou au moins limitent les frottements entre des pièces devant être déplacées les unes par rapport aux autres. C'est le cas du brevet allemand 904 946, du brevet français 2 009 748, du brevet français 1 299 218, du brevet américain 3 466 951 et du brevet français 1 372 163 dont la description est incluse à la présente demande de brevet.

La présente invention crée une nouvelle machine qui, pouvant être munie d'une à plusieurs dizaines de lames, permet le sciage de matériau naturel quelle que soit leur dureté à l'outil diamanté, améliore la qualité des surfaces sciées, les conditions de coupe, les cadences de production et donc le prix de revient de ce type de fabrication. Il est également indiqué que l'amélioration de la qualité du sciage permet, par l'obtention d'un meilleur état des surfaces, d'économiser un temps appréciable sur les opérations ultérieures de surfaçage et de polissage.

Conformément à l'invention, ce dispositif pour la coupe de pierres, marbres, granits et autres produits analogues au moyen de lames diamantées déplacées dans un mouvement alternatif par un cadre porte-lames, lui-même relié d'une part à un ensemble moteur à mouvement alternatif, et d'autre part à un cadre dans lequel il coulisse est caractérisé en ce que le cadre porte-lames est isolé du cadre par des éléments amortisseurs de vibrations. Par cette disposition, on évite que les lames de sciage diamantées soient soumises à des vibrations pendant un travail et il en résulte une très bonne vitesse de coupe, une précision jamais atteinte pour la coupe et une faible usure des lames de sciage dont les particules de diamant ne sont ni arrachées ni autrement détériorées, seule une usure normale se produisant dans le temps.

Diverses autres caractéristiques de l'invention ressortent aussi des revendications dépendantes.

Une forme de réalisation de l'objet de l'invention est décrite de manière détaillée ci-dessous et représentée, à titre d'exemple, au dessin annexé.

La figure 1 est une élévation, en partie arrachée et schématique, d'une machine de sciage à mouvement alternatif faisant application de l'invention.

La figure 2 est une élévation frontale correspondant à la fig. 1.

La figure 3 est une coupe prise sensiblement suivant la ligne III-III de la fig. 1.

La figure 4 est un détail d'une des pièces apparaissant à la fig. 3.

La figure 5 est une coupe schématique d'un autre détail de réalisation.

La machine illustrée au dessin comporte des montants arrière 1, 1a et des montants avant 2, 2a qui sont disposés par exemple aux angles d'un trapèze rectangle. Les montants sont reliés par des longerons supérieurs 3 et des traverses supérieures 4.

Les montants sont entourés par des ensembles de guidage 5 auxquels est fixé un cadre porte-glissières 6. Le cadre porte-glissières supporte au moyen de consoles de suspension 7 un cadre porte-lames 8. Les lames 9 du cadre 8 sont destinées à scier un bloc 10, par exemple un bloc de granit.

Le cadre porte-lames 8 est muni latéralement d'au moins un axe 11 pour l'articulation de la tête d'une bielle 12 dont le pied est articulé sur un axe 13 monté à l'extrémité d'une manivelle 14 calée sur un arbre 15 portant un volant d'inertie 16 et entraîné par un moteur électrique 17 à vitesse variable de préférence.

Le mouvement de montée et de descente du cadre porte-lames 8 est commandé par celui du cadre porte-glissières 6 et, dans l'exemple représenté, ce mouvement est assuré par des vis 18 disposées dans les montants, la vitesse de rotation des vis étant synchronisée par des boîtes de transmission 19 reliées entre elles par des arbres 20 entraînés par un moto-réducteur 21.

Suivant l'invention, pour empêcher la propagation des vibrations, on crée une liaison fluide entre les différents organes soumis à un mouvement relatif les uns par rapport aux autres.

En ce qui concerne le cadre porte-lames 8, celui-ci est relié près de ses extrémités par les consoles de suspension 7 à des dispositifs glissants 22. Chaque dispositif glissant comporte un profilé 23 sur lequel sont montées des glissières 24, 25. Les glissières 24, 25 sont maintenues entre des patins 26, dans l'exemple, au nombre de trois. Ces patins sont disposés dans un carter 27 qui est lui-même fixé aux longerons du cadre porte-glissières 6.

Chaque patin délimite dans sa face tournée vers la glissière 24 au moins un logement 28 qui est alimenté en fluide sous pression, par exemple en huile, par un canal 29. Des conduites 30 sont prévues pour l'alimentation de chaque logement 28.

La disposition ci-dessus permet de maintenir les glissières dans un état voisin de celui d'un état de lévitation et, par conséquent, d'une part, de réduire considérablement les frottements lors du déplacement du cadre porte-lames par rapport au cadre porte-glissières et, d'autre part, et surtout, d'empêcher la transmission des vibrations dues en particulier à la friction existant entre les lames 9 et le bloc 10 en cours de sciage et au système d'entraînement vertical ou horizontal du cadre porte-lames.

Le dispositif décrit ci-dessus peut être mis en œuvre de manière analogue entre les ensembles de guidage 5 et les montants 1, 1a et 2, 2a.

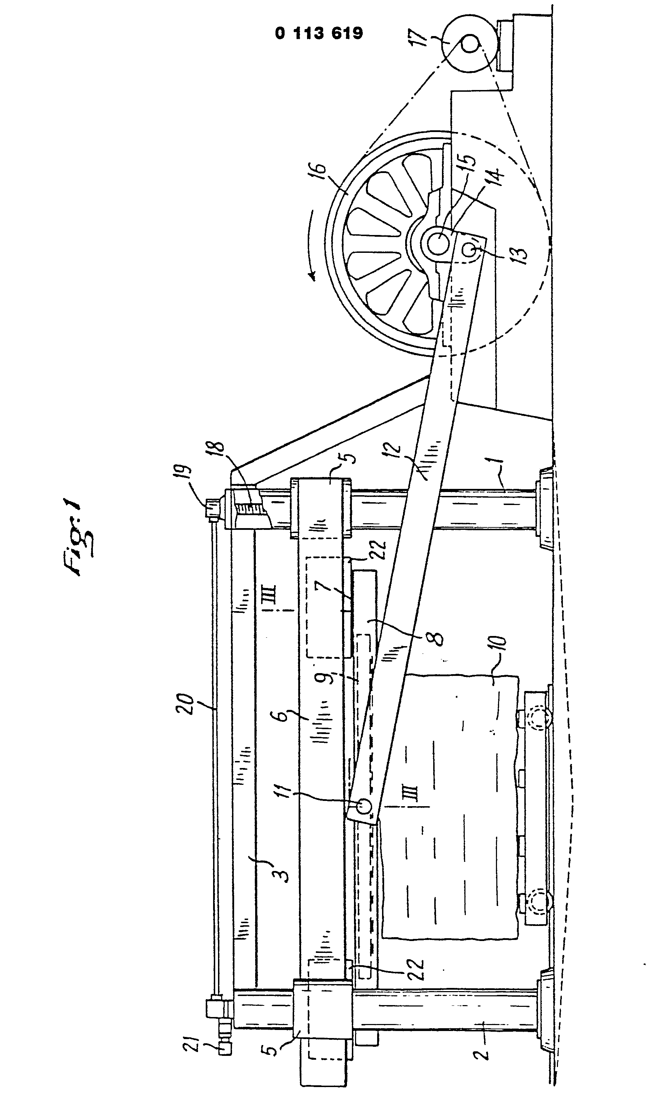

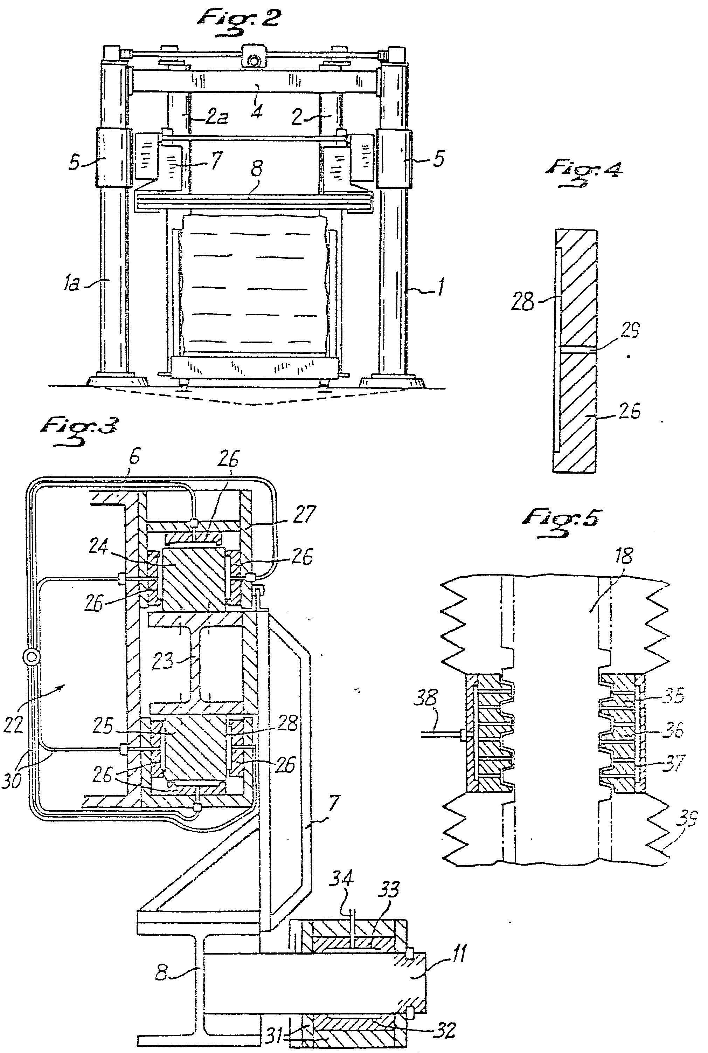

Comme l'illustre également la fig. 3, l'axe 11 sur lequel est articulée la tête de la bielle 12 comporte une boîte à palier 31 contenant des patins 32 arqués qui délimitent un logement 33 dans lequel débouche une conduite 34 d'amenée de fluide sous pression.

En prévoyant une constitution analogue pour l'axe 13 du pied de la bielle 12, on est assuré d'isoler l'ensemble moteur 17, 16 du cadre porte-lames et, par conséquent, de filtrer les vibrations provenant soit du porte-lames, soit de l'ensemble moteur.

Il est supplémentairement possible de monter également l'arbre 15 sur des paliers fluides comme décrits ci-dessus.

Pour empêcher que des vibrations soient transmises vers ou à partir du moto-réducteur 21, les vis 18 dont la rotation assure la descente puis la remontée du cadre porte-glissières sont reliées à celui-ci par des écrous 35 (fig. 5) délimitant des canaux 36 reliés à au moins une chambre collectrice 37 dans laquelle du fluide sous pression est amené par une conduite 38. Le dessin montre que les canaux 36 débouchent dans le fond des filets du taraudage de l'écrou, ce qui fait que cet écrou dont les filets sont usinés par rapport à celui de la vis 18 n'est pas en contact matériel avec ladite vis.

Pour éviter que des salissures puissent s'introduire dans le circuit fluide et dans les filets des écrous et des vis, les écrous sont munis de soufflets d'étanchéité 39 ou dispositifs analogues.

L'isolement des différentes pièces mobiles les unes par rapport aux autres au moyen de dispositifs amortissant et/ou filtrant les vibrations permet d'utiliser des lames de coupe dites diamantées, c'est-à-dire dont les éléments abrasifs constitués par des diamants sont maintenus dans une matrice à partir de laquelle le risque d'arrachement est ou éliminé ou fortement réduit par la suppression des vibrations.

Pour que les lames diamantées soient mises en œuvre au mieux de leurs caractéristiques, il est prévu, d'une part, que le moteur 17 soit à vitesse variable, ce qui permet de faire varier la cadence de battement par exemple réglée en dépendance de la nature du bloc 10 à scier, et, d'autre part, de réaliser au moins la manivelle 14 sous la forme d'un élément télescopique pour permettre de faire varier la course des lames, c'est-à-dire notamment d'optimiser la course en fonction du bloc 10 et des compositions de l'outil pour permettre d'utiliser toujours les lames dans des conditions de sciage optimales. Dans ce cas, la vitesse du moteur 17 est réglée afin que la vitesse linéaire maximale atteinte par les lames ne dépasse pas un seuil déterminé.

Le moto-réducteur 21 est de son côté réalisé de préférence aussi sous la forme d'un ensemble à vitesse variable pour que la vitesse de descente des lames qui détermine la profondeur de chaque passe de travail pendant leur mouvement de coulissement ne dépasse pas un seuil pré-établi.

Bien que cela ne soit pas représenté, il est, dans certains cas, avantageux de remplacer les vérins à vis que constituent les ensembles vis 18 et écrous 35 par des vérins coulissants hydrauliques alimentés de façon que les lames de coupe exercent toujours une pression unitaire constante sur la matière à couper.

Bien que cela ne soit pas représenté, la possibilité de faire varier en continu la course des lames, la cadence de battement ainsi que la vitesse de descente permet donc un pilotage de l'ensemble par un système micro-informatique ayant mémorisé la combinaison optimum de ces paramètres.

L'invention n'est pas limitée à l'exemple de réalisation représenté et décrit en détail, car diverses modifications peuvent y être apportées sans sortir de son cadre. En particulier, le cadre porte-lames 8 peut être déplacé par des vérins de préférence hydrauliques et à double effet agissant soit directement sur lui, soit sur les dispositifs glissants 22. De même, l'ensemble moto-réducteur 17 et le volant d'inertie 16 peut être remplacé par un moteur hydraulique.

Dans une variante des patins 26 de même que des patins 32 et les parties d'écrou 36 peuvent être constitués par les pièces polaires d'enroulement électromagnétique engendrant des champs magnétiques pour le maintien en état de lévitation des pièces devant être isolées pour empêcher la transmission des vibrations.

**Revendications**

1. Dispositif pour la coupe de blocs de granit, marbres, pierres et autres produits analogues au moyen de lames diamantées (9) déplacées dans un mouvement alternatif par un cadre porte-lames (8), lui-même relié d'une part à un ensemble moteur à mouvement alternatif et d'autre part à un cadre (6) dans lequel il coulisse, caractérisé en ce que le cadre porte-lames (8) est isolé du cadre (6) par des éléments amortisseurs de vibrations.

2. Dispositif suivant la revendication 1, caractérisé en ce que les éléments amortisseurs de vibrations sont du type dit fluide maintenant les organes mobiles les uns par rapport aux autres séparés par une couche d'un fluide sous pression, le fluide étant liquide ou gazeux.

3. Dispositif suivant la revendication 1, caractérisé en ce que les éléments amortisseurs de vibration sont du type électromagnétique maintenant les organes mobiles en état de lévitation par rapport aux organes fixes qui les guident.

4. Dispositif suivant l'une des revendications 1 à 3, caractérisé en ce que le cadre porte-lames (8) est relié à des glissières (24, 25) par un carter (27) dans lequel sont disposés des patins ou pièces polaires (26) délimitant des logements (28) faisant face à des parois de glissières (24, 25) maintenues en état de lévitation par le fluide sous pression admis dans lesdits logements ou le champ magnétique créé par des bobinages.

5. Dispositif suivant la revendication 4, caractérisé en ce que le carter comportant les patins coopérant avec les glissières est relié à un cadre porte-glissières guidé le long d'ensembles de guidage commandés par des vérins.

6. Dispositif suivant la revendication 5, caractérisé en ce que les vérins de commande des ensembles de guidage sont du type à vis (18) et écrous (35), la vitesse de rotation des vis étant synchronisée par des arbres (20) reliés à des boîtes de transmission (19), les écrous (35) comportant des canaux pour l'amenée de fluide sous pression dans le fond des filets du taraudage qu'ils délimitent.

7. Dispositif suivant la revendication 5, caractérisé en ce que les vérins sont du type hydraulique.

8. Dispositif suivant l'une des revendications 1 à 7, caractérisé en ce que le cadre porte-lames (8) est commandé par au moins une bielle (12) dont une des articulations de tête (11) ou de pied (13) est munie d'un palier fluide.

9. Dispositif suivant la revendication 8, caractérisé en ce que la bielle est commandée par un moteur à vitesse variable à laquelle il est relié par un volant d'inertie (16), un arbre (15) et une manivelle (14).

10. Dispositif suivant la revendication 9, caractérisé en ce que l'arbre (15) est monté sur des paliers fluides.

11. Dispositif suivant l'une des revendications 9 ou 10, caractérisé en ce que la manivelle (14) est de longueur réglable.

12. Dispositif suivant l'une des revendications 1 à 11, caractérisé par des moyens pour maintenir constante la pression unitaire d'application des lames diamantées sur le bloc (10) à découper.

13. Dispositif suivant l'une des revendications 1 à 12, caractérisé par la possibilité de faire varier les uns par rapport aux autres d'une manière optimum en cours de sciage les paramètres relatifs à la cadence de battement, à la longueur de la course et à la vitesse de descente du cadre portant les lames de sciage au moyen d'un système micro-informatique à mémoire.

**Claims**

1. Device for cutting blocks of granite, marble, stone and other similar products by means of diamond containing blades (9) displaced in a reciprocating movement by a blade carrying frame (8), itself connected on the one hand to a reciprocating motor unit and on the other hand to a frame (6) in which it slides, characterized in that the blade carrying frame (8) is isolated from the frame (6) through vibration damping elements.

2. Device according to a claim 1, characterized in that the vibration damping elements are of the so-called fluid type for maintaining the relatively mobile components separated by a layer of a pressurized fluid, the fluid being a liquid or a gaz.

3. Device according to claim 1, characterized in that the vibration damping elements are of the electromagnetic type for maintaining the mobile elements in a levitation state with respect to the fixed means which guide them.

4. Device according to one of claims 1 to 3, characterized in that the blade carrying frame (8) is connected to slides (24, 25) through a casing (27) in which are placed shoes or polar pieces (26) forming housings (28) placed opposite to walls of slides (24, 25) maintened in a levitation state by the pressurized fluid supplied in said housings or by the magnetic field provided by windings.

5. Device according to claim 4, characterized in that the casing comprising the shoes cooperating with the slides is connected to a slide carrying frame guided along guiding units controlled by cylinders.

6. Device according to claim 5, characterized in that the control cylinders of the guiding units are of the screw (18) and nut (35) type, the rotation speed of the screws being synchronized by means of shafts (20) connected to transmission boxes (19), the nuts (35) comprising channels for supplying pressurized fluid at bottom of threads of the tapping that they form.

7. Device according to claim 5, characterized in that the cylinders are of the hydraulic type.

8. Device according to one of claims 1 to 7, characterized in that the blade carrying frame (8) is controlled by at least one connecting rod (12), one of the head (11) or foot (13) articulations of which is provided with fluid bearing means.

9. Device according to claim 8, characterized in that the connecting rod is driven by a variable speed motor unit to which it is connected through an inertia wheel (16), a shaft (15) and a crank-shaft (14).

10. Device according to claim 9, characterised in that the shaft (15) is mounted on fluid bearing means.

11. Device according to one of claims 9 or 10, characterized in that the crank-shaft (14) is of an adjustable length.

12. Device according to one of claims 1 to 11, characterized by means for maintaining constant the unitary pressure applying the diamond containing blades on the block (10) to be cut.

13. Device according to one of claims 1 to 12, characterized by the possibility to vary the one with respect to the other in an optium manner during a sawing operation the parameters related to the beating rate, the length of the stoke and the speed of fall of the sawing blade carrying frame by means of a memory micro-data processing system.

**Patentansprüche**

1. Vorrichtung zum Schneiden von Blöcken ans Granit, Marmor, Stein und anderen ähnlichen Produkten mittels Diamentenschneiden (9) die durch einen die Schneiden haltenden Rahmen (8) hin- und her bewegt werden, der selbst einerseits mit einem eine Hin- und Herbewegung erzeugenden Motor und andererseits mit einem Rahmen (6) verbunden ist, in welchem er gleitet, dadurch gekennzeichnet, dass der die Schneiden haltende Rahmen (8) vom Rahmen (6) durch schwingungsdämpfende Elemente getrennt ist.

2. Vorrichtung nach Anspruch 1, dadurch gehennzeichnet, dass die schwingungsdämpfenden Elemente zum sogenannten Fluid-Typ gehören, d. h. die gegeneinander beweglichen Bestandteile durch eine Schicht aus einem unter Druck stehenden Fluid voneinander getrennt sind, das aus einer Flüssigkeit oder einem Gas bestehen kann.

3. Vorrichtung nach Anspruch 1, dadurch gekennzeichnet, dass die schwingungsdämpfende Elemente zum elektromagnetischen Typ gehören, d. h. die beweglichen Bestandteile gegenüber den ortsfesten Bestandteilen schweben, durch welche sie geführt werden.

4. Vorrichtung nach einem der Ansprüche 1 bis 3, dadurch gekennzeichnet, dass der Rahmen (8), der die Schneiden trägt, mit Gleitschienen (24, 25) über ein Gehäuse (27) verbunden ist, in welchem Gleitschuhe oder Polstücke (26) angeordnet sind, die Aufnahmeräume (28) begrenzen, die den Wänden der Gleitschienen (24, 25) gegenüberliegen, die durch das unter Druck stehende, in diese Aufnahmeräume eindringende Fluid oder durch das durch die Spulen erzeugte magnetische Feld in schwebendem Zustand gehalten werden.

5. Vorrichtung nach Anspruch 4, dadurch gekennzeichnet, dass das Gehäuse, das die mit den Gleitschienen Zusammenwirkenden Gleitschuhe enthält, mit einem Rahmen verbunden ist, der Gleitschienen trägt und in der Längsrichtung von durch Winden gesteuerten Führungen geführt wird.

6. Vorrichtung nach Anspruch 5, dadurch gekennzeichnet, dass die die Führungen steuernden Winden als Schraubenwinden (18) oder Mutterwinden (35) ausgebildet sind, wobei die Drehzahl der Schrauben durch Wellen (20) synchronisiert wird, die mit Übertragungselementen (19) verbunden sind, wober in den Schraubenmüttern (35) Kanale ausgespart sind, die für die Zuführung von einer unter Druck stehenden Flüssigkeit bis zum Gewindekern bestimmt sind.

7. Vorrichtung nach Anspruch 5, dadurch gekennzeichnet, dass die Winden als hydraulische Winden ausgebildet sind.

8. Vorrichtung nach einem der Ansprüche 1 bis 7, dadurch gekennzeichnet, dass der Rahmen (8), der die Schneiden trägt durch mindestens ein Pleuel (12) gesteuert wird, wobei eines der Gelenke dieses Pleuels, entweder am Kopf (11) oder am Fuss (13), mit einem fluidischen Lager versehen ist.

9. Vorrichtung nach Anspruch 8, dadurch gekennzeichnet, dass das Pleuel durch einen sich mit veränderlichen Drehzahl drehenden Motor gesteuert wird, mit welchem es über ein Schwungrad (16), eine Welle (15) und einer Kurbel (14) verbunden ist.

10. Vorrichtung nach Anspruch 9, dadurch gekennzeichnet, dass die Welle (15) auf fluidischen Lagern angeordnet ist.

11. Vorrichtung nach einem der Ansprüche 9 oder 10, dadurch gekennzeichnet, dass die Länge der Kurbel (14) einstellbar ist.

12. Vorrichtung nach einem der Ansprüche 1 bis 11, dadurch gekennzeichnet, dass sie mit Mitteln ausgestattet ist, die est gestatten, den durch die Diamantenschneiden auf den zu schneidenden Block ausgeübten Druck pro Flächeneinheit konstant zu halten.

13. Vorrichtung nach einem der Ansprüche 1 bis 12, dadurch gekennzeichnet, dass die Parameter, die die Schwingungsperiode die Hublänge und die Abstieggeschwindigkeit des die Sägeschneiden tragenden Rahmens betreffen mittels eines microinformatischen Systems mit Speichern gegeneinander optimal varriert werden können.

*Fig:1*

Fig. 2

Fig. 4

Fig. 3

Fig. 5